(19) **Europäisches Patentamt / European Patent Office / Office européen des brevets**

(11) **EP 3 530 785 A1**

(12) # EUROPEAN PATENT APPLICATION
published in accordance with Art. 153(4) EPC

(43) Date of publication:
**28.08.2019 Bulletin 2019/35**

(21) Application number: **17861572.0**

(22) Date of filing: **02.10.2017**

(51) Int Cl.:
*D03D 15/10* (2006.01)    *D03D 13/00* (2006.01)
*F16C 33/18* (2006.01)

(86) International application number:
**PCT/JP2017/035806**

(87) International publication number:
**WO 2018/074207 (26.04.2018 Gazette 2018/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.10.2016 JP 2016205863**

(71) Applicant: **Toray Industries, Inc.**
**Tokyo 103-8666 (JP)**

(72) Inventors:
• **CAO, Zhidan**
**Otsu-shi**
**Shiga 520-2141 (JP)**
• **TONOMORI, Keiichi**
**Otsu-shi**
**Shiga 520-2141 (JP)**
• **TSUCHIKURA, Hiroshi**
**Otsu-shi**
**Shiga 520-2141 (JP)**

(74) Representative: **Mewburn Ellis LLP**
**City Tower**
**40 Basinghall Street**
**London EC2V 5DE (GB)**

(54) **SLIDING FABRIC**

(57) [PROBLEMS]
It it to provide a sliding fabric which exhibits a small amount of compression in the thickness direction under load application, does not cause generation of play between members, and is superior in sliding properties and durability.

[SOLUTION]
A sliding fabric is configured in such a manner that fluororesin fibers (X) and other fibers (Y) are alternately arranged as warps and/or wefts on at least one side of the fabric and the amount of compression of the fabric is 25 μm or less.

**Description**

TECHNICAL FIELD

The present invention relates to a sliding fabric containing a fluororesin fiber suitable as a sliding material.

BACKGROUND ART

Conventionally, fluororesin has been used with it being laminated or coated on a surface layer of a sliding member by taking advantage of its low friction coefficient. When fluororesin is laminated or coated, however, a fluororesin film is thin and readily peels off due to its non-adhesion property and therefore it has been necessary to repeat lamination or coating in order to maintain sliding properties for a long term. To solve such a drawback, a sliding member has been developed, including fluororesin in the form of fibers which is arranged as a woven or knitted fabric or a non-woven fabric on the surface of the sliding member to improve its friction durability, which is then made a composite member with a woven or knitted fabric having an easily-adhering nature with other materials for firmer adhesion.

For example, Patent Document 1 discloses a woven fabric in which fluorine fiber yarns and high-strength fiber yarns having a tensile strength of 2 GPa or more are interwoven, where the woven fabric is a fluorine fiber interwoven fabric characterized in that fluorine fibers cover 30% or more of the surface area of any one side of the woven fabric. Thanks to such a configuration, it is possible to provide a composite material sliding material being superior in durability and mechanical characteristics which exert a low friction property of the fluorine fibers and the fluorine fibers do not peel off when it is used as a base material of a composite material bearing.

Further, Patent Document 2 discloses a multilayered woven fabric composed of a sliding woven fabric containing PTFE fibers and a base woven fabric, where the multilayered woven fabric is a heat wear-resistant fabric having been made high in heat resistance and wear resistance and capable of exerting a long-term sliding property even under a higher temperature environment than before by optimally configuring the base surface.

PRIOR ART DOCUMENTS

PATENT DOCUMENTS

Patent Document 1: JP-A-2005-220486
Patent Document 2: JP-A-2015-124450

SUMMARY OF THE INVENTION

PROBLEMS TO BE SOLVED BY THE INVENTION

However, since the fluorine fiber interwoven fabric disclosed in Patent Document 1 is a woven fabric in which fluorine fiber yarns and high-strength fiber yarns having a tensile strength of 2 GPa or more are interwoven, it is problematic in that depending on the high-strength fiber to be used, the tensile elastic modulus is high and easily damages a mating material and the sliding property as a woven fabric is deteriorated, and as a result, long-term durability cannot be expected. In addition, when used for applications such as bearing members, play may occur between the members if the amount of compression in the thickness direction of the fluorine fiber interwoven fabric under load application is large.

In the technology disclosed in Patent Document 2, when the amount of compression in the thickness direction is large under load application, play tends to occur between members, and therefore there is still room for improvement in order to make the sliding property to be exhibited for a longer period of time.

It is a challenge of the present invention to provide a sliding fabric which exhibits a small amount of compression in the thickness direction under load application, does not cause generation of play between members, and is superior in sliding properties and durability.

SOLUTIONS TO THE PROBLEMS

In order to solve such a problem, the present invention has any of the following configurations.

(1) A sliding fabric in which fluororesin fibers (X) and other fibers (Y) are alternately arranged as warps and/or wefts on at least one side of the fabric and the amount of compression of the fabric is 25 μm or less.

(2) The sliding fabric according to the above (1), wherein an interval between fluororesin fibers (X) positioned on both sides of the other fiber (Y) is in the range of 20 to 3500 μm.

(3) The sliding fabric according to the above (1), wherein the other fibers (Y) are of a single type.

(4) The sliding fabric according to the above (3), wherein an equal number of the fluororesin fibers (X) and the other fibers (Y) are alternately arranged.

(5) The sliding fabric according to the above (3) or (4), wherein 1 to 4 fibers of the fluororesin fibers (X) and 1 to 4 fibers of the other fibers (Y) are alternately arranged.

(6) The sliding fabric according to the above (1), wherein the fineness of the other fibers (Y) is in a range of 50 to 800 dtex.

(7) The sliding fabric according to the above (1), wherein the tensile elastic modulus of the other fibers (Y) is in a range of 20 to 800 cN/dtex.

(8) The sliding fabric according to the above (1), wherein the elongation of the other fibers (Y) is 3% or more.

(9) The sliding fabric according to any one of the above (1) to (8), wherein the sliding fabric is a woven fabric.

(10) The sliding fabric according to the above (9), wherein the sliding fabric is a woven fabric composed of one layer or two layers.

(11) The sliding fabric according to the above (9) or (10), wherein the sliding fabric is a plain-woven fabric.

(12) The sliding fabric according to any one of the above (1) to (11), wherein the sliding fabric has a thickness of 1 mm or less.

EFFECTS OF THE INVENTION

According to the present invention, by alternately arranging fluororesin fibers and other fibers as warps and/or wefts on at least one side of fabric and by adjusting the amount of compression of the fabric to 25 μm or less, there is provided a sliding fabric which exhibits a small amount of compression in the thickness direction under load application and does not cause generation of play between members even when used as a sliding material for such applications as a bearing member, and is superior in sliding properties and durability.

EMBODIMENTS OF THE INVENTION

The sliding fabric according to the present invention is characterized in that fluororesin fibers (X) and other fibers (Y) are alternately arranged as yarns constituting warps or wefts or both warps and wefts on at least one side of the fabric and the amount of compression of the fabric Is 25 μm or less.

<Fluororesin Fiber (X)>

In the present invention, the fluororesin that is a component of the fluororesin fiber (X) may be any resin composed of monomer units containing one or more fluorine atoms in the main chain or a side chain thereof. Above all, those composed of monomer units having a larger number of fluorine atoms are preferred.

The monomer units containing one or more fluorine-containing fibers are preferably contained in an amount of 70 mol% or more, more preferably 90 mol% or more, and further preferably contains 95 mol% or more of the repeating structural units of the polymer.

Examples of the monomer containing one or more fluorine atoms include fluorine atom-containing vinyl monomers, such as tetrafluoroethylene, hexafluoropropylene, and chlorotrifluoroethylene, among which tetrafluoroethylene is preferably used.

As the fluororesin, polytetrafluoroethylene (PTFE), tetrafluoroethylene-hexafluoropropylene copolymer (FEP), tetrafluoroethylene-p-fluoroalkyl vinyl ether copolymer (PFA), polychlorotrifluoroethylene (PCTFE), ethylene-tetrafluoroethylene copolymer (ETFE), etc., may be used singly or in combination of two or more species thereof.

In a fluororesin containing tetrafluoroethylene units, the tetrafluoroethylene unit content is preferably higher in view of sliding characteristics, and PTFE fibers as a homopolymer are most preferably used.

As the form of the fluororesin fiber (X), any of a monofilament composed of one filament and a multifilament composed of a plurality of filaments can be used.

The total fineness of the fibers composed of a monofilament or a multifilament constituting the fluororesin fiber (X) is preferably in a range of 50 to 2000 dtex, more preferably in a range of 100 to 1000 dtex. When the total fineness of the fibers constituting the fabric is 50 dtex or more, the strength of the fibers is large, and so breakage of yarns during weaving can be reduced and so the process passing property can be improved. When the total fineness is 2000 dtex or less, the fabric is small in thickness and the amount of compression in the thickness direction can be reduced under load application, so that play between members can be suppressed and long-term durability is improved.

<Other Fiber (Y)>

In the present invention, as the other fibers (Y), fibers of polyphenylene sulfide (PPS), polyparaphenylene terephthalamide, polymetaphenylene isophthalamide, glass, carbon, nylon, polyester, high molecular weight polyethylene (molecular weight: 1,000,000 to 7,000,000) can be used. These may be used singly or in combination of two or more thereof. Among them, PPS fibers, which are low in tensile elastic modulus and superior in high temperature resistance characteristics in continuous use, are preferably used. It is preferable to use polyparaphenylene terephthalamide, glass fibers, etc., which have good high strength properties under a high-load use environment. When the nonsliding surface is required to have adhesion performance, it is preferable to use nylon fibers.

As the form of the other fiber (Y), any of a monofilament composed of one filament and a multifilament composed of a plurality of filaments can be used.

The total fineness of the fibers composed of a monofilament or a multifilament constituting the other fiber (Y) is preferably in a range of 50 to 800 dtex, more preferably in a range of 100 to 300 dtex. When the total fineness of the fibers constituting the fabric is 50 dtex or more, the strength of the fibers is large, and so breakage of yarns during weaving can be reduced and so the process passing property can be improved. When the total fineness is 800 dtex or less, the fabric is small in thickness and the amount of compression in the thickness direction can be reduced under load application, so that generation of play between members can be suppressed and long-term durability is improved.

The tensile elastic modulus of the fibers composed of a monofilament or a multifilament constituting the other fiber (Y) is preferably in a range of 20 to 800 cN/dtex, more preferably in a range of 20 to 100 cN/dtex. When the tensile elastic modulus of the fibers constituting the fabric is 20 cN/dtex or more, the strength of the fiber is high and resistance to shearing force due to wear of the fabric can be strengthened, so that the fabric is difficult to break even when worn. When the tensile elastic modulus is 800 cN/dtex or less, the rigidity of the fibers is not excessively high and the fibers are difficult to damage mating materials, so increase in the friction coefficient of a friction interface can be suppressed and long-term durability is improved.

When fibers generally having a high tensile elastic modulus, such as high molecular weight PE and carbon fiber, are used, it is desirable to adjust the compression ratio not to exceed the range defined in the present invention by reducing the fineness, reducing the use amount, or the like as necessary.

The elongation of the fibers composed of a monofilament or a multifilament constituting the other fiber (Y) is preferably 3% or more, more preferably in a range of 10 to 50%. When the elongation of the fibers constituting the fabric is 3% or more, stretching performance of the fibers is large, and so breakage of yarns during weaving can be reduced and so the process passing property can be improved. When the elongation is within a range of 10 to 50%, since this is at the same level as the elongation of the fluororesin fibers, it is easy to set conditions for weaving, wrinkles caused by shrinkage difference are less likely to occur on a fabric surface during post processing, so that the process passing property is improved.

<Sliding Fabric>

In the sliding fabric according to the present invention, fluororesin fibers (X) and other fibers (Y) are alternately arranged as yarns constituting warps and/or wefts on at least one side of the fabric.

Here, examples of the mode in which the fluororesin fibers (X) and other fibers (Y) are alternately arranged on at least one side of the fabric include:

> A: 1 fiber / B: 1 fiber / C: 1 fiber;
> A: 3 fibers / B: 3 fibers / C: 3 fibers; and
> A: 1 fiber / B: 3 fibers / C: 2 fibers / A: 3 fibers / B: 4 fibers / C: 1 fiber,
> where a fluororesin fiber (X) is represented by A, other fiber (Y) is represented by B and C.

In one possible embodiment of the present invention, fluororesin fibers (X) and other fibers (Y) are alternately arranged as warps, and either fluororesin fibers (X) or other fibers (Y) are arranged as wefts. In another possible embodiment, either fluorocarbon resin fibers (X) or other fibers (Y) are arranged as warps, and fluororesin fibers (X) and other fibers (Y) are alternately arranged as wefts. In another possible embodiment, both warps and wefts are fluororesin fibers (X) and other fibers (Y) alternately arranged. Above all, in a preferred configuration, both warps and wefts are fluororesin fibers (X) and other fibers (Y) alternately arranged. As a result, fluororesin fibers (X) and other fibers (Y) can be arranged alternately in both the longitudinal direction and the transverse direction of the fabric, and so a low friction property retained by the fluororesin fibers (X) and an aggregate effect functioning as fabric strength retained by the other fibers (Y) can be sufficiently exhibited regardless of the directionality of the fabric.

In the present invention, "fluororesin fibers (X) and other fibers (Y) are alternately arranged" means that the fluorine fibers (X) and one type or two or more types of other fibers (Y) are arranged by turns. This is a situation where the fluororesin fibers (X) and the other fibers (Y) are mixed in one direction of the fabric.

Incidentally, in the sliding fabric of the present invention, an interval between the fluororesin fibers (X) positioned on both sides of the other fiber (Y) is preferably in a range of 20 to 3500 $\mu$m, more preferably in a range of 50 to 1000 $\mu$m. When the interval is 20 $\mu$m or more, the other fibers are not excessively thin and strength can be secured, so that an aggregate effect to retain fabric strength can be exhibited and the durability of the fabric is improved. When the interval is 3500 $\mu$m or less, the distance between the fluororesin fibers is not excessively large and a fluorine film is easily formed at the friction interface, so that the sliding properties and the durability of the fabric are improved.

The interval of the fluorine fibers (X) referred to herein shall be evaluated, for example, between A1-A2 when two types (A1 and A2) as the fluorine fibers (X) and four types (B1, B2, B3 and B4) as the other fibers (Y) are used and there is an arrangement in which A1/B1/B2/A2/B3/B4 is repeated.

As to the other fibers (Y), one type or two or more types thereof can be used, but they are preferable be of one type. "One type" as referred to herein shall mean that the materials constituting the fibers are the same. The same type (one type) of polymers refers to polymers containing common main repeating units, such as nylon 66's and polyethylene terephthalates, and for example, a combination of a homopolymer and a copolymer is also acceptable as the same type of polymers.

When fibers different from each other (two or more types) are used as the other fibers (Y), they differ in stretching/shrinking performance; therefore, a smaller number of types of fibers used leads to a situation where it is easy to set conditions for weaving, wrinkles caused by shrinkage difference are less likely to occur on a fabric surface during post processing, so that the process passing property is improved.

Further, in the sliding fabric of the present invention, it is preferable that an equal number of the fluororesin fibers (X) and one type of other fibers (Y) are alternately arranged.

Here, examples of the mode in which an equal number of fluororesin fibers (X) and one type of other fibers (Y) are alternately arranged include:

A: 1 fiber / B: 1 fiber;
A: 5 fibers / B: 5 fibers; and
A: 10 fibers / B: 10 fibers,
where a fluororesin fiber (X) is represented by A and the other fiber (Y) is represented by B.

As a result, fluororesin fibers (X) and other fibers (Y) are arranged at the same proportion and evenly, so that a low friction property retained by the fluororesin fibers (X) and an aggregated effect functioning as fabric strength retained by the other fibers (Y) can be sufficiently exhibited.

It is further preferable that 1 to 4 fluororesin fibers (X) and 1 to 4 fibers of one type of other fibers (Y) are alternately arranged.

Here, examples of the mode in which 1 to 4 fibers of fluororesin fibers (X) and 1 to 4 fibers of one type of other fibers (Y) are alternately arranged include:

A: 1 fiber / B: 1 fiber;
A: 2 fibers / B: 2 fibers;
A: 3 fibers / B: 3 fibers; and
A: 4 fibers / B: 4fibers,
where a fluororesin fiber (X) is represented by A and the other fiber (Y) is represented by B.

Due to this, it is easy to form a film from the fluororesin on a sliding surface through reduction of the interval between the fluororesin fibers (X) and it is possible to reduce friction as a sliding fabric.

In the present invention, the amount of compression of the sliding fabric is 25 $\mu$m or less. The amount of compression is preferably 10 $\mu$m or less. By adopting the above configuration, it is possible to obtain a sliding fabric which exhibits a small amount of compression in the thickness direction under load application, does not cause generation of play between members, and is superior in sliding properties and durability. When the amount of compression of the sliding fabric exceeds 25 $\mu$m, the amount of compression in the thickness direction under load application becomes large and play may occur between members, so that good long-term durability cannot be expected. It is preferable that the amount of compression of the sliding fabric is 10 $\mu$m or less because, if so, the amount of compression in the thickness direction is small even under a heavy load, no play occurs between members, and long-term durability is improved.

The amount of compression of the sliding fabric is calculated by the following calculation formula.

$$\text{Amount of compression} = T_0 - T_1$$

Here, $T_0$: the thickness attained when an initial load of 50 cN/cm$^2$ was applied

$T_1$: the thickness attained when a constant load of 300 cN/cm$^2$ was applied for 1 minute

To suppress the amount of compression within the above range, it is preferable to use a yarn with a low fineness or a single layer fabric. In addition, post-processing methods such as calendering, pressing, and etc. are also preferable.

As the form of the sliding fabric of the present invention, any of a woven fabric, a knitted fabric, and a multilayered composite material obtained by multilaying these fabrics can be applied, but a woven fabric is preferred because it is better that denseness, smoothness, etc. are higher. As the woven fabric may be either of a single layer or a multilayer woven fabric including two or more layers, but a woven fabric composed of one layer or two layers is preferable because it is preferable that the amount of compression is lower.

As the tissue of the sliding fabric of the present invention, plain-woven fabric, twilled fabric, satin and other tissues can be applied, but plain-woven fabric is preferable because it is better that denseness, strength, etc. are higher.

The thickness of the sliding fabric of the present invention is preferably 1 mm or less, more preferably 0.3 mm or less. When the thickness of the sliding fabric is 1 mm or less, it is possible to obtain a sliding fabric which exhibits a small amount of compression in the thickness direction under load application, does not cause generation of play between members, and is superior in sliding properties and durability.

To further improve the durability, it is also possible to use the sliding fabric with it being impregnated with resin. Here, as the resin with which the sliding fabric is impregnated, thermosetting resin or thermoplastic resin may be used. Examples of the thermosetting resin include, but not limited to, phenol resin, melamine resin, urea resin, unsaturated polyester resin, epoxy resin, polyurethane resin, diallyl phthalate resin, silicon resin, polyimide resin, vinyl ester resin and their modified resins, and examples of the thermoplastic resin include, but not limited to, vinyl chloride resin, polystyrene, ABS resin, polyethylene, polypropylene, fluororesin, polyamide resin, polyacetal resin, polycarbonate resin, polyester and polyamide as well as synthetic rubber or elastomer such as thermoplastic polyurethane, butadiene rubber, nitrile rubber, neoprene and polyester, which can be used preferably. Among them, resin mainly containing phenol resin and polyvinylbutyral resin, unsaturated polyester resin, vinyl ester resin, polyolefin-based resins such as polyethylene or polypropylene, and polyester resin are preferably used in terms of impact resistance, dimension stability, strength, cost and the like. Such thermosetting resin or thermoplastic resin may contain various additives that are usually used for the industrial purpose or use, for improving the productivity at the manufacturing steps or the processing steps or for improving their characteristics. For example, they may contain additives, such as modifier, plasticizer, filler, mold-releasing agent, colorant, and diluent. Note here that mainly contained in this case refers to a component of the largest ratio by weight among the components other than solvent, and in the case of resin mainly containing phenol resin and polyvinylbutyral resin, this means that the ratios by weight of these two types of resin are the largest and the second largest (random order).

For a generally used method for impregnating the sliding fabric with resin, when thermosetting resin is used, the thermosetting resin may be dissolved in solvent to prepare for varnish, which may then be coated on the fabric for impregnation by knife coating processing, roll coating processing, comma coat processing, gravure coating processing or the like. When thermoplastic resin is used, melting extrusion lamination or the like is commonly used.

To the sliding fabric of the present invention may be added as needed a fluorine-based lubricant.

The sliding fabric of the present invention obtained in such a way has a structure where the other fibers (Y) firmly restrains the fluororesin fibers (X) as aggregates to maintain the fabric strength and abraded fluororesin fibers (X) are accumulated by the other fibers (Y), so that it can exhibit a sliding property for a long period of time, and there can be provided a sliding fabric which exhibits a small amount of compression in the thickness direction under load application due to its small amount of compression, does not cause generation of play between members, and is superior in durability.

EXAMPLES

Hereafter, examples of the present invention will be described together with comparative examples.

Methods for measuring characteristics used in the examples are as follows.

(1) Amount of compression of fabric

According to JIS L 1096: 2010 (Testing methods for woven and knitted fabrics), a fabric was sampled into a size of 5 cm × 5 cm.

Using a SE-15 type compression amount testing instrument as a compression amount analyzer, the sample prepared was placed slowly on a 2 cm$^2$ probe, and a measuring handle was turned slowly in the DOWN direction to apply a load; a thickness $T_0$ attained when a load of 100 cN was applied was read, and a thickness $T_1$ when a load of 600 cN was applied for 1 minute was read, and then, an amount of compression was calculated from the following formula.

$$\texttt{Amount of compression} = \texttt{T}_0 - \texttt{T}_1$$

(2) Interval between fluororesin fibers (X) located on both sides of other fiber (Y) in the sliding fabric

Based on a photograph taken by enlarging the surface of the woven fabric on which fluororesin fibers (X) and the other fibers (Y) are alternately arranged by 30 times with a microscope VHX-2000 manufactured by Keyence, the minimum interval between the fluororesin fibers (X) located on both sides of the other fiber (Y) was measured at n = 5, and the average value was calculated. As to the interval, a distance between an end of one of fluororesin fibers where the end is located on a side adjacent to an other fiber (Y) and an end of another fluororesin fiber where the end is located on a side adjacent to the other fiber (Y), where the ends of the fluororesin fibers are arranged across the other fiber (Y), was measured.

(3) Fineness of fiber

The fineness of fibers was measured according to JIS L 1013: 2010 (Testing methods for man-made filament yarns).

(4) Tensile elastic modulus of fiber

The tensile elastic modulus of fibers was measured in accordance with Method B disclosed in Section 8.9 of JIS L 1013: 2010 (Testing methods for man-made filament yarns).

(5) Elongation of fiber

The elongation of fibers was measured according to JIS L 1013: 2010 (Testing methods for man-made filament yarns) .

(6) Thickness of fabric

The thickness of fabrics was measured according to JIS L 1013: 2010 (Testing methods for woven and knitted fabrics).

(7) Ring wear test (Friction wear test)

According to Method A of JIS K 7218: 1986 (Testing Methods for Sliding Wear Resistance of Plastics), a fabric was sampled in a length of 30 mm and a width of 30 mm, and was placed on a POM resin plate with the same dimensions and a thickness of 2 mm and then is fixed to a sample holder.

The mating material used is made of S45C, and has a hollow cylindrical shape of 25.6 mm in outer diameter, 20 mm in inner diameter and 15 mm in length. The surface of this is polished with sandpaper so that the roughness is within the range of 0.8 pmm $\pm$ 0.1 Ra, which is measured by a roughness tester (manufactured by Mitsutoyo Corporation, SJ-201).

As the ring wear tester, MODEL: EFM-III-EN manufactured by Orientec was used, and a test was performed at a friction load of 1 MPa and a frictional speed of 180 mm/second so as to measure the sliding torque until the frictional sliding distance of 6000 m. Then the friction coefficient at a stable part was calculated, and the surface state of the fabric sample after sliding was observed. A sample having substantially no wearing was rated as ⊙, a sample having wearing but having a stable friction coefficient was rated as ○, a sample having wearing and an increased friction coefficient was rated as Δ, and a sample where the fabric was broken was rated as ×.

(8) Play

The obtained fabric was used as a sliding material of a pairing and the degree of play between the members was checked for a period of 3 months, and the case where there was almost no play was marked as ⊙, the case where there was a slight play was marked as ○, the case where there was a remarkable play but no breakage was marked as Δ, and the case where the fabric was broken was marked as ×.

Example 1

A single plain woven fabric was produced with a loom to attain a weaving density of 70 warps + 70 wefts / inch (2.54 cm) using PPS fibers having 220 dtex, a tensile elastic modulus of 40 cN/dtex and an elongation of 30% and PTFE fibers having 440 dtex as warps and wefts while alternately arranging them at 1 (fiber): 1 (fiber). Then refining was performed thereto in a refining tank at 80°C, and the fabric was set at 200°C.

The amount of compression of this woven fabric, the interval of the fluororesin fibers located on both sides of the other fiber, the thickness, the result evaluated with a friction wear testing machine, and the result of the evaluation of play as a bearing sliding material are summarized in Table 1.

Example 2

As a sliding layer, glass fibers having 300 dtex, a tensile elastic modulus of 300 cN/dtex and an elongation of 3.5%, nylon fibers having 100 dtex, a tensile elastic modulus of 40 cN/dtex and an elongation of 40%, and PTFE fibers having 220 dtex were alternately arranged at 1 (fiber): 3 (fibers): 3 (fibers) and used as warps, and nylon fibers having 100 dtex, a tensile elastic modulus of 40 cN/dtex and an elongation of 40% were used as wefts. In addition, as a base layer, nylon fibers having 100 dtex, a tensile elastic modulus of 40 cN/dtex and an elongation of 40% were used as warps and wefts. Then, a two-layered woven fabric in which the sliding layer was twilled fabric and the base layer was plain woven fabric was produced with a loom so as to have a weaving density of the sliding layer of 85 warps + 100 wefts / inch (2.54 cm) and a weaving density of 100 warps + 100 wefts / inch (2.54 cm). Then refining was performed thereto in a refining tank at 80°C, and the fabric was set at 200°C. Thereafter, impregnation with a fluororesin was performed by a roll coating processing system.

The amount of compression of this woven fabric, the interval of the fluororesin fibers located on both sides of the other fiber, the thickness, the result evaluated with a friction wear testing machine, and the result of the evaluation of play as a bearing sliding material are summarized in Table 1.

Example 3

A two-layered knitted fabric was produced with a warp knitting machine to attain a number of courses of 29 courses/inch (2.54 cm) and a number of wales of 19 wales/inch (2.54 cm) using nylon fibers having 220 dtex, a tensile elastic modulus of 40 cN/dtex and an elongation of 40% and PTFE fibers having 440 dtex as front warps while alternately arranging them at 1 (fiber): 1 (fiber): 3 (fibers): 2 (fibers): 1 (fiber): 4 (fibers), and also using PET fibers having 560 dtex, a tensile elastic modulus of 120 cN/dtex and an elongation of 40% as rear warps. Then refining was performed thereto in a refining tank at 80°C, and the fabric was set at 200°C.

The amount of compression of this knitted fabric, the interval of the fluororesin fibers located on both sides of the other fiber, the thickness, the result evaluated with a friction wear testing machine, and the result of the evaluation of play as a bearing sliding material are summarized in Table 1.

Example 4

A single plain woven fabric was produced with a loom to attain a weaving density of 25 warps + 25 wefts / inch (2.54 cm) using carbon fibers having 40 dtex, a tensile elastic modulus of 1300 cN/dtex and an elongation of 1% and PTFE fibers having 220 dtex as warps and wefts while alternately arranging them at 4 (fibers): 4 (fibers). Then refining was performed thereto in a refining tank at 80°C, and the fabric was set at 200°C. In addition, the fabric was impregnated with fluororesin to prepare a prepreg and a composite material was formed.

The amount of compression of this composite material, the interval of the fluororesin fibers located on both sides of the other fiber, the thickness, the result evaluated with a friction wear testing machine, and the result of the evaluation of play as a bearing sliding material are summarized in Table 1.

Comparative Example 1

A single plain woven fabric was produced with a loom to attain a weaving density of 70 warps + 70 wefts / inch (2.54 cm) using PPS fibers having 220 dtex, a tensile elastic modulus of 40 cN/dtex and an elongation of 30% as warps and PTFE fibers having 440 dtex as wefts. Thereafter, the same refining and setting as in Example 1 were performed.

The amount of compression of this woven fabric, the interval of the fluororesin fibers located on both sides of the other fiber, the thickness, the result evaluated with a friction wear testing machine, and the result of the evaluation of play as a bearing sliding material are summarized in Table 2.

Comparative Example 2

A single plain woven fabric was produced with a loom to attain a weaving density of 18 warps + 18 wefts / inch (2.54 cm) using carbon fibers having 1000 dtex, a tensile elastic modulus of 1300 cN/dtex and an elongation of 1% and PTFE fibers having 1760 dtex as warps and wefts while alternately arranging them at 1 (fiber): 1 (fiber). Thereafter, the same refining and setting as in Example 1 were performed.

The amount of compression of this woven fabric, the interval of the fluororesin fibers located on both sides of the other fiber, the thickness, the result evaluated with a friction wear testing machine, and the result of the evaluation of play as a bearing sliding material are summarized in Table 2.

Comparative Example 3

As a sliding layer, glass fibers having 300 dtex, a tensile elastic modulus of 300 cN/dtex and an elongation of 3.5%, nylon fibers having 100 dtex, a tensile elastic modulus of 40 cN/dtex and an elongation of 40%, and PTFE fibers having 220 dtex were alternately arranged at 15 (fibers): 35 (fibers): 15 (fibers) and used as warps, and nylon fibers having 100 dtex, a tensile elastic modulus of 40 cN/dtex and an elongation of 40% were used as wefts. As a base layer, nylon fibers having 100 dtex, a tensile elastic modulus of 40 cN/dtex and an elongation of 40% were used as warps and wefts. Then, a woven fabric having the same structure as in Example 2 was prepared, and the same refining and setting were performed. Thereafter, impregnation with a fluororesin was performed by a roll coating processing system.

The amount of compression of this woven fabric, the interval of the fluororesin fibers located on both sides of the other fiber, the thickness, the result evaluated with a friction wear testing machine, and the result of the evaluation of play as a bearing sliding material are summarized in Table 2.

Comparative Example 4

A knitted fabric having the same structure as in Example 3 was produced using PTFE fibers having 440 dtex as front warps and using PET fibers having 560 dtex, a tensile elastic modulus of 120 cN/dtex and an elongation of 40% as rear warps, followed by the same refining and setting. The amount of compression of this knitted fabric, the interval of the fluororesin fibers located on both sides of the other fiber, the thickness, the result evaluated with a friction wear testing machine, and the result of the evaluation of play as a bearing sliding material are summarized in Table 2.

[Table 1]

| Item | | Example 1 | Example 2 | Example 3 | Example 4 |
|---|---|---|---|---|---|
| Used yarn of sliding surface | Warp | PPS fiber Fluorine fiber | Glass fiber Nylon fiber Fluorine fiber | Nylon fiber Fluorine fiber PET fiber | Carbon fiber Fluorine fiber |
| | Weft | PPS fiber Fluorine fiber | Nylon fiber | - | Carbon fiber Fluorine fiber |
| Alternating ratio of used yarns on sliding surface | Warp | 1:1 | 1:3:3 | 1:1:3:2:1:4 | 4 : 4 |
| | Weft | 1:1 | - | - | 4 : 4 |
| Fabric structure | | Single plain woven fabric | Two-layered woven fabric | Two-layered knitted fabric | Single plain woven fabric |
| Amount of compression ($\mu$m) | | 8 | 18 | 25 | 10 |
| Interval ($\mu$m) between PTFE fibers located on both sides | | 140 | 500 | 1100 | 4000 |
| Thickness (mm) | | 0.25 | 0.4 | 0.9 | 0.3 |
| Wear resistance (Friction Wear Test) | | ⊙ | ⊙ | ○ | ○ |
| Play (Bearing Sliding Material) | | ⊙ | ⊙ | ○ | ○ |

[Table 2]

| Item | | Comparative Example 1 | Comparative Example 2 | Comparative Example 3 | Comparative Example 4 |
|---|---|---|---|---|---|
| Used yarn of sliding surface | Warp | PPS fiber | Carbon fiber Fluorine fiber | Glass fiber Nylon fiber Fluorine fiber | Fluorine fiber PET fiber |
| | Weft | Fluorine fiber | Carbon fiber Fluorine fiber | Nylon fiber | - |
| Alternating ratio of used yarns on sliding surface | Warp | - | 1:1 | 15:35:15 | - |
| | Weft | - | 1:1 | - | - |
| Fabric structure | | Single plain woven fabric | Single plain woven fabric | Two-layered woven fabric | Two-layered knitted fabric |
| Amount of compression ($\mu$m) | | 8 | 35 | 30 | 26 |
| Interval ($\mu$m) between PTFE fibers located on both sides | | - | 560 | 5520 | - |
| Thickness (mm) | | 0.25 | 1.5 | 0.4 | 0.9 |
| Wear resistance (Friction Wear Test) | | $\times$ | $\Delta$ | $\times$ | $\times$ |
| Play (Bearing Sliding Material) | | $\times$ | $\Delta$ | $\times$ | $\times$ |

INDUSTRIAL APPLICABILITY

The sliding fabric of the present invention can be used particularly suitably for OA instruments, bearing members, or the like because it exhibits a small amount of compression in the thickness direction under load application, does not cause generation of play between members, and is superior in sliding properties and durability.

**Claims**

1.    A sliding fabric in which fluororesin fibers (X) and other fibers (Y) are alternately arranged as warps and/or wefts on at least one side of the fabric and the amount of compression of the fabric is 25 $\mu$m or less.

2.    The sliding fabric according to claim 1, wherein an interval between fluororesin fibers (X) positioned on both sides of the other fiber (Y) is in the range of 20 to 3500 $\mu$m.

3.    The sliding fabric according to claim 1, wherein the other fibers (Y) are of a single type.

4.    The sliding fabric according to claim 3, wherein an equal number of the fluororesin fibers (X) and the other fibers (Y) are alternately arranged.

5.    The sliding fabric according to claim 3 or 4, wherein 1 to 4 fibers of the fluororesin fibers (X) and 1 to 4 fibers of the other fibers (Y) are alternately arranged.

6.    The sliding fabric according to claim 1, wherein the fineness of the other fibers (Y) is in a range of 50 to 800 dtex.

7.    The sliding fabric according to claim 1, wherein the tensile elastic modulus of the other fibers (Y) is in a range of 20 to 800 cN/dtex.

8.    The sliding fabric according to claim 1, wherein the elongation of the other fibers (Y) is 3% or more.

9.    The sliding fabric according to any one of claims 1 to 8, wherein the sliding fabric is a woven fabric.

10.   The sliding fabric according to claim 9, wherein the sliding fabric is a woven fabric composed of one layer or two layers.

**11.** The sliding fabric according to claim 9 or 10, wherein the sliding fabric is a plain-woven fabric.

**12.** The sliding fabric according to any one of claims 1 to 11, wherein the sliding fabric has a thickness of 1 mm or less.

## INTERNATIONAL SEARCH REPORT

International application No.

PCT/JP2017/035806

### A. CLASSIFICATION OF SUBJECT MATTER
Int.Cl. D03D15/10(2006.01)i, D03D13/00(2006.01)i, F16C33/18(2006.01)i

According to International Patent Classification (IPC) or to both national classification and IPC

### B. FIELDS SEARCHED
Minimum documentation searched (classification system followed by classification symbols)
Int.Cl. D03D15/00-15/12, D03D13/00, F16C33/18

Documentation searched other than minimum documentation to the extent that such documents are included in the fields searched
| | |
|---|---|
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)
Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X | JP 2011-190561 A (W. L. GORE & ACCOCIATES, CO., LTD.) 29 September 2011, claims, paragraphs [0002], [0040], [0043]–[0052], examples (Family: none) | 1–12 |
| A | Microfilm of the specification and drawings annexed to the request of Japanese Utility Model Application No. 199201/1984 (Laid-open No. 114123/1986) (MIURAKUMIHIMOKOUJOU. CO., LTD.) 18 July 1986, claims, page 5, line 19 to page 7, line 10, fig. 4 (Family: none) | 1–12 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 December 2017 (04.12.2017) | 19 December 2017 (19.12.2017) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2017/035806 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2009-542994 A (FEDERAL-MOGUL CORPORATION) 03 December 2009, claims, paragraphs [0012]-[0015], fig. 2-5 & US 2008/0006061 A1 & US 2011/0314676 A1 & WO 200/005785 A2, paragraphs [0017]-[0020], claims, fig. 2-5 & EP 2038464 A2 & KR 10-2009-0029826 A & CN 101506423 A | 1-12 |
| A | CN 102535167 A (JIANGSU ZHONGTIAN AVIATION FITTINGS CO., LTD.) 04 July 2012, claims, examples (Family: none) | 1-12 |
| A | CN 105088489 A (TORAY FIBERS & TEXTILES RESEARCH LABORATORIES (CHINA) CO., LTD.) 25 November 2015, claims, examples & CN 103849988 A | 1-12 |
| A | JP 2011-214164 A (TORAY INDUSTRIES, INC.) 27 October 2011, claims (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005220486 A

- JP 2015124450 A